(19) Europäisches Patentamt
European Patent Office
Office européen des brevets

(11) Publication number: 0 449 456 A1

(12) **EUROPEAN PATENT APPLICATION**

(21) Application number: 91302167.1

(51) Int. Cl.$^5$: C09J 4/04

(22) Date of filing: 14.03.91

(30) Priority: 16.03.90 JP 64093/90
06.04.90 JP 90164/90

(43) Date of publication of application:
02.10.91 Bulletin 91/40

(84) Designated Contracting States:
DE FR GB

(71) Applicant: THREE BOND CO., LTD.
1456, Hazama-cho
Hachioji-shi Tokyo (JP)

(72) Inventor: Furuta, Kiyoshi
1456 Hazama-cho
Hachioji-shi, Tokyo 193 (JP)

(74) Representative: Cropp, John Anthony David et al
MATHYS & SQUIRE 10 Fleet Street
London, EC4Y 1AY (GB)

(54) **Adhesive composition.**

(57) An α-cyanoacrylate-based adhesive composition having excellent physical properties is obtained by incorporating a phosphorus compound having the general formula:

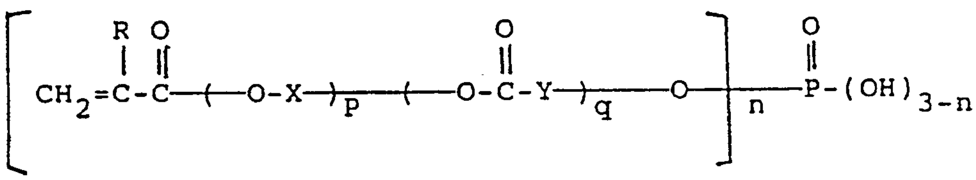

wherein R is H or $CH_3$: X and Y are each an alkylene group having 1 to 6 carbon atoms, which may have a substituent group; p is 1 to 10; q is 0 to 10; and n is 1 to 2.

EP 0 449 456 A1

# ADHESIVE COMPOSITION

## Background of the Invention

The present invention relates to a modification of an α-cyanoacrylate-based adhesive which is known as an instantaneous adhesive.

α-Cyanoacrylate-based adhesives react and polymerize with a small amount of water on the surface of an article to be bonded, then harden rapidly and exhibit a high bonding force for various materials of articles to be bonded, including metals, rubber, plastics and glass, so are widely used for bonding, fixing and filling purposes in various industrial fields.

However, although conventional α-cyanoacrylate-based adhesives exhibit a high bonding force against a load acting in a shearing direction, they are not always satisfactory in the resistance to impact, to peeling and to heat. Improvements have been tried using various additives, but it cannot be said that satisfactory results have been obtained so far. The use of phosphorus-based additives has also been studied (see Japanese Patent Laid Open Nos. 31480/1986 and 142068/1980 and Japanese Patent Publication No. 37276/1971), but cannot improve the impact resistance and peeling resistance to a satisfactory extent, so are not employable in uses requiring high reliability.

Further, for improving the performance of conventional α-cyanoacrylate-based adhesives against loads or impact forces acting in a peeling direction, there have been proposed a method using acrylonitrile rubber, urethane rubber, or acrylic rubber (see Japanese Patent Publication No. 37263/1978) and a method using a carboxylic acid or an anhydride thereof (see Japanese Patent Publication No. 54029/1981). In these methods, however, the bonding force against impact force is still unsatisfactory in comparison with other adhesives, e.g. two-part type acrylic adhesives for structure with rubber elastomer incorporated therein, and therefore the use of the adhesives obtained by those methods is limited.

The present invention has been accomplished in view of the above-mentioned circumstances and it is the object of the invention to provide an α-cyanoacrylate-based adhesive composition superior in physical properties such as impact resistance and peeling resistance, also superior in heat resistance, employable in uses requiring high reliability, and exhibiting outstanding effects.

## Summary of the Invention

The present invention resides in an adhesive composition comprising an α-cyanoacrylate and at least one kind of a phosphorus compound represented by the following formula:

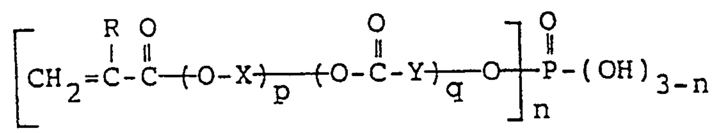

wherein R is H or $CH_3$; X and Y are each an alkylene group having 1 to 6 carbon atoms, which may have a substituent group; p is 1 to 10; q is 0 to 10; and n is 1 to 2.

According to the present invention there also is provided an adhesive composition comprising the above components plus an elastomeric polymer capable of being melted 0.5 wt% or more.

## Detailed Description of the Invention

As the α-cyanoacrylate, i.e. α-cyanoacrylicester, which is a main component of the adhesive composition according to the present invention there may be used a suitable known compound. As examples of such known compound there are mentioned such esters as methyl, ethyl, butyl, propyl, allyl, cyclohexyl, phenyl, methoxyethyl, and ethoxyethyl. These may be used each alone or as a mixture of two or more.

It is essential for the present invention to use as an essential component an acid type phosphoric ester having acryl or methacryl group represented by the foregoing general formula. Phosphorus compounds not having such a structural characteristic cannot achieve the object of the present invention.

For example, in the case where such an inorganic phosphoric acid as polyphosphoric acid is used (see Japanese Patent Laid Open No. 31480/1986), the effect thereof is not sufficient, and with increase in the amount thereof used, the hardening speed becomes extremely low, although the impact resistance is somewhat

improved. Even in the case of a phosphoric ester having acryl or methacryl group, if it is a non-acid type, namely a complete ester type, (see Japanese Patent Publication No. 37276/1971), there is not attained an improvement of peeling strength and of impact strength, although the heat resistance is improved. Further, when there is used an unpolymerizable phosphoric ester (see Japanese Patent Laid Open No. 142068/1980), the peeling strength and impact strength are not improved although there is recognized an improvement of preservability.

Essentially, any phosphorus compound is employable in the invention if only it is represented by the foregoing general formula. As examples of X and Y in the same general formula there are mentioned ethylene, propylene, butylene, and pentylene, which may have an inert substituent group as necessary. In the same general formula, X and Y may be different in the same molecule; p is preferably 1 to 6; q is preferably 0 to 6; and n is 1 to 2. It is also preferred to use a mixture of one or more compounds wherein n is 1 with one or more compounds wherein n is 2. The amount of the phosphorus compound used in the invention is not specially limited if only its function and effect can be exhibited. But usually it is in the range of 0.001 to 5 wt%, preferably 0.01 to 1 wt%. The presence of an unreacted or overreacted product in the manufacture of the phosphorus compound is allowed if it does not exert a bad influence on the function and effect of the phosphorus compound.

The elastomeric polymer used as a component in the present invention has an elastomer characteristic that it can be melted 0.5 wt% or more in the α-cyanoacrylate. Usually, a synthetic rubber having rubber elasticity is preferred. When viewed from the standpoint of physical properties, an elastomeric polymer having the following properties is preferred:

① an average molecular weight of not less than 5,000;

② a Mooney viscosity defined by JIS K6300 of 10 to 60 ($ML_{1+3}$ 100°C); and

③ a glass transition temperature (Tg) of not higher than 15°C.

Typical examples of elastomeric polymers include butadiene-acrylonitrile copolymer (commonly called NBR rubber) (e.g. trade name JSR N-220S, a product of Japan Synthetic Rubber Co., Ltd.), methyl acrylate-ethylene copolymer (commonly called ethylene acryl rubber) (e.g. trade name VAMAC G, a product of Du Point), copolymer of ethyl acrylate or butyl acrylate with 2-chloroethylvinyl ether or acrylonitrile (acrylic rubber commonly called ACM or ANM) (e.g. trade name NIPOL AR-51, a product of The Japanese Geon Co., Ltd.), ethylene-vinyl acetate copolymer carboxylated acrylonitrile-butadiene copolymer, styrene-butadiene copolymer, chloroprene elastomer, polyester elastomer, fluoric elastomer, polyisoprene elastomer, epichlorohydrin elastomer, ethylene-propylene copolymer elastomer, polyurethane elastomer, and cyanoacryl elastomer.

Even those falling under the category of resin rather than rubber are also employable if only they have the foregoing elastomer characteristic. Examples are a urethane resin available commercially under the trade name of "Pandix T-5201" (a product of Dainippon Ink And Chemicals Incorporated) and an acrylonitrile-butyl acrylate-methyl methacrylate copolymer also available commercially under the trade name of "Hipearl M4203" (a product of Negami Kogyo Sha).

It is also effective to use such acrylonitrile-butadiene-styrene copolymer (ABS resin) and methyl methacrylate-butadiene-styrene copolymer (MBS resin) as disclosed in Japanese Patent Laid Open No. 30643/1978.

The amount of the elastomeric polymer used in the present invention differs, depending on the degree of polymerization thereof and the degree of compatibility thereof with α-cyanoacrylate, but usually it is in the range of 0.5 to 30 wt%.

The elastomeric polymer is usually melted in α-cyanoacrylate. The melting is performed by heating at a temperature in the range of room temperature to 100°C. In the case where the elastomeric polymer used is difficult to melt, there may be used a solvent such as methyl ethyl ketone or methylene chloride to assist the melting of the elastomeric polymer. The elastomeric polymer may be subjected to rolling for molecular cutting before use. This is also effective in improving the compatibility between the elastomeric polymer and the α-cyanoacrylate. Certain elastomeric polymers make the α-cyanoacrylate unstable due to impurities contained therein, e.g. alkali substance. In this case, the influence of such impurities can be eliminated by washing the elastomeric polymers beforehand with hydrochloric acid, sulfuric acid, organic acid or carboxylic acid anhydride solution, then with water, and thereafter oven drying.

Known additives such as stabilizer, thickener, coloring agent, hardening accelerator, filler, and plasticizer, may be incorporated in the adhesive composition of the present invention. For example, there may be used $SO_2$, $BF_3$, sulfonic acid, or sultone, as an anionic polymerization inhibitor in an amount of 5 to 100 ppm; hydroquinone, hydroquinone monomethyl ether, catechol, or pyrogallol, as a radical polymerization inhibitor; polymethyl methacrylate or 2-cyanoacrylate polymer as a thickener; fumed silica, carbon, or graphite, as a filler; further, as a flexibility improver there may be used such a plasticizer as dioctyl phthalate, sebacic ester, or tricresyl phosphate.

By adding the foregoing phosphorus compound to a conventional α-cyanoacrylate, the bonding force

against peeling and that against impact are improved to a remarkable extent, and in the bonding of metals such as iron, stainless steel, copper, brass, and aluminum, the impact strength is greatly improved. Also in the bonding of other materials, e.g. plastics, rubber, glass, earthenware, and leather, the resulting adhesivecomposition can be used effectively. And also in point of water-, heat-, vibration-, weather- and chemicals-resistance the adhesive composition of the present invention is improved over conventional adhesive compositions.

Further, an adhesive composition comprising the above α-cyanoacrylate/phosphorus composition plus the elastomeric polymer is improved in peeling strength, shear strength and impact strength to a surprising extent and is superior also in point of preservability.

The present invention will be described below in terms of working and comparative examples.

Example 1

Various phosphorus compounds were added each 0.1 wt% to an α-ethylcyanoacrylate available commercially as "Three Bond 1741" (trade name) (a product of Three Bond Co.) to prepare samples, which were then measured for impact strength). The results are as shown in Table 1.

Comparative Example 1

In the same way as in Example 1, 0.1 wt% of a phosphorus compound-not falling under the scope of the invention was added to the commercial α-ethylcyanoacrylate "Three Bond 1741" to prepare a sample, which was then measured for impact strength. The result is as shown in Table 7.

The measurement of impact strength was conducted according to ASTM-D950-54, using a tester manufactured by Toyo Seiki Seisakusho and having a maximum impact strength value thereon of 150 kgf·cm/inch$^2$.

Test piece hardening conditions were 25°C, 55% humidity, 24 hours.

Table 1

| No. | Phosphorus Compound | Impact Strength (kgf· cm/inch$^2$) |
|---|---|---|
| 1 | 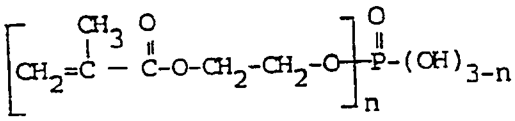 n=1-2 | 150 or more |
| 2 | 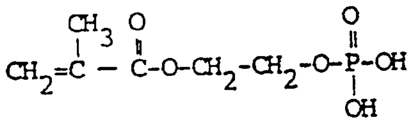 | 150 or more |
| 3 | 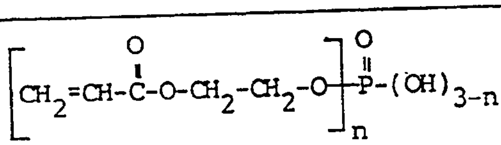 n=1-2 | 150 or more |
| 4 | 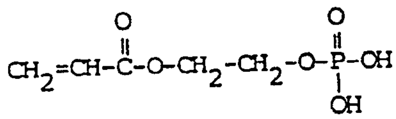 | 150 or more |
| 5 | 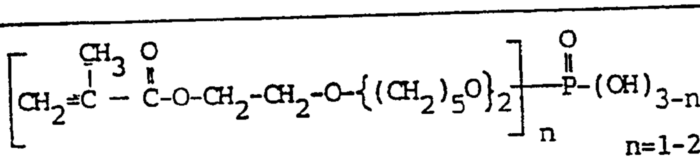 n=1-2 | 150 or more |
| 6 | 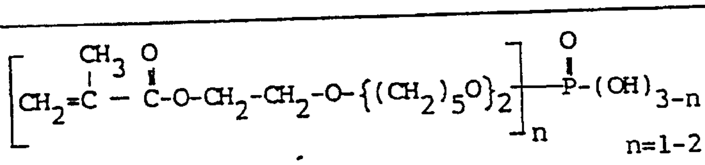 n=1-2 | 150 or more |
| 7 | 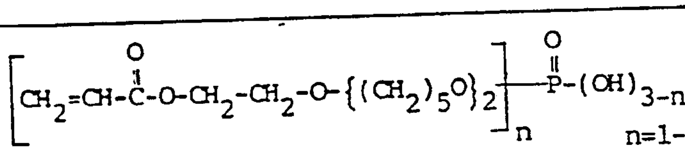 n=1-2 | 150 or more |
| 8 | 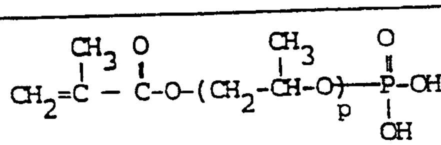 p=5-6 | 150 or more |
| 9 | 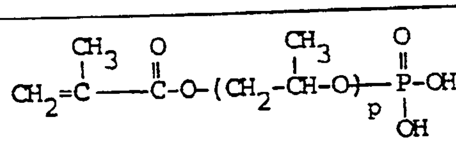 p=4-5 | 150 or more |

The above phosphorus compounds are commercially available compounds of the following manufacturers and trade names.

| No. | Name of Manufacturer | Trade Name |
|---|---|---|
| 1 | Daihachi Kagaku Kogyosho K.K. | MR-200 |
| 2 | Daihachi Kagaku Kogyosho K.K. | MR-100 |
| 3 | Daihachi Kagaku Kogyosho K.K. | AR-200 |
| 4 | Daihachi Kagaku Kogyosho K.K. | AR-100 |
| 5 | Nippon Kayaku Co., Ltd. | KAYAMER PM-21 |
| 6 | Daihachi Kagaku Kogyosho K.K. | MRL-200 |
| 7 | Daihachi Kagaku Kogyosho K.K. | ARL-200 |
| 8 | Unichemical K.K. | Phosmer-PP |
| 9 | Unichemical K.K. | Phosmer-PM |

Example 2

(1) As an α-cyanoacrylate there was used α-ethylcyano-acrylate.

(2) As elastomeric polymers there were used those shown in Tables 2 and 3.

RX-1 to RX-5 in Table 2 represent elastomeric polymers falling under the scope of the present invention, while RY-1 in Table 3 represents a polymer (Comparative Example 2) outside the scope of the invention.

(3) As additives there were used those shown in Tables 4, 5 and 6.

AX-1 to AX-8 in Table 4 represent acid type phosphoric esters falling under the scope of the present invention, while AY-1 to AY-10 in Table 5 represent phosphorus compounds (comparative) outside the scope of the invention, and AY-11 to AY-16 in Table 6 represent known compounds (comparative) used for improving the bonding force.

(4) The resulting compositions were evaluated as follows.

Using adhesives comprising the above components, test pieces were prepared for evaluation of the following items. After hardening for 24 hours under the conditions of 25°C, 55% humidity, the hardened test pieces were measured for strength at room temperature.

1) Tensile Shear Bonding Force (Fe/Fe) Measured according to JIS K6850.

2) Peeling Strength (Fe/Fe) Measured according to JIS K6854.

3) Impact Strength (Fe/Fe) Measured according to ASTM-D950-54.

The maximum impact strength value is 150 kgf·cm/inch$^2$ (measurement range on the tester).

(5) The results of the working examples are shown in Tables 7 to 10 (X-1 to X-17).

(6) The results of the comparative examples are shown in Tables 7 to 10 (Y-1 to Y-28).

Table 2 Examples of Elastomeric Polymers in the Present Invention

| | Polymer | Trade Name | Name of Manufacturer |
|---|---|---|---|
| RX-1 | Acrylonitrile-butadiene | JSR N220S | Japan Synthetic Rubber |
| RX-2 | Ethylene-acryl | VAMAC G | Showa Denko·Du Pont |
| RX-3 | Polyurethane | PANDEX T-5201 | Dainippon Ink And Chemicals |
| RX-4 | Acryl | NIPOL AR-51 | The Japanese Geon |
| RX-5 | Ethylene-vinyl acetate | SOALEX DH | The Nippon Synthetic Chemical Industry |

Table 3 Example of Polymer Outside the Present Invention

| | Polymer | Trade Name | Name of Manufacturer |
|---|---|---|---|
| RY-1 | Methyl methacrylate | Sumipex B | Sumitomo Chemical |

(Effects of the Invention)

The adhesive composition of the present invention is greatly improved in bonding force over conventional α-cyanoacrylate-based adhesives. The adhesive composition of the invention, when hardened, has flexibility and is superior in the resistance to heat shock and to heat aging. Further, the resistance to water, to weather and to chemicals are also improved. Consequently, the adhesive composition of the invention is employable also in such industrial fields as automobile, electric, electronic and precision machine fields where high reliability is required and to which the conventional α-cyanoacrylate adhesives have not been applicable, thus greatly contributing to the shortening of process and the reduction of cost. Not only the adhesive composition of the invention is applicable to conventional uses but also it can be used for fixing electric and electronic parts, e.g. bearings, motors and shafts, for preventing loosening of bolts of automobile parts, for fixing pipe joints, and for flange face liquid sealing.

Table 4 Examples of Phosphorus Compounds According to the Present Invention

| No. | Phosphorus Compound | Trade Name | Name of Manufacturer |
|---|---|---|---|
| AX-1 | 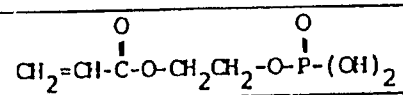 | AR-100 | Daihachi Kagaku Kogyosho |
| AX-2 | 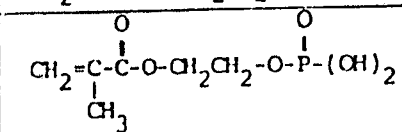 | MR-100 | - ditto - |
| AX-3 | 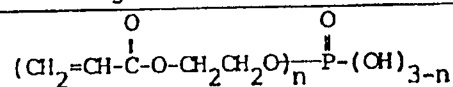 n=1-2 | AR-200 | - ditto - |
| AX-4 | 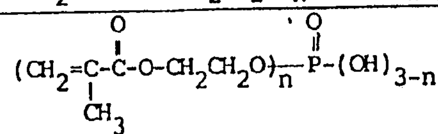 n=1-2 | MR-200 | - ditto - |
| AX-5 | 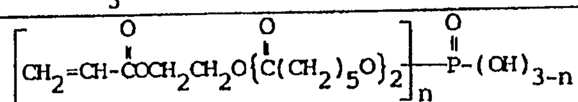 n=1-2 | ALR-200 | - ditto - |
| AX-6 | 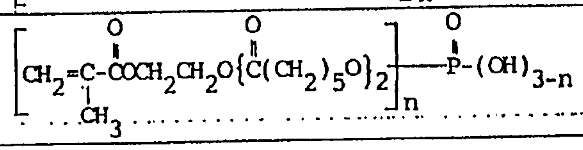 n=1-2 | MLR-200 | - ditto - |
| AX-7 | 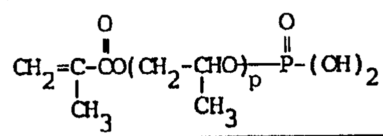 p=5-6 | Phosmer-PP | Unichemical |
| AX-8 | 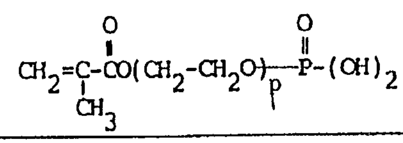 p=4-5 | Phosmer PE | - ditto - |

Table 5 Examples (Comparative Examples) of Phosphorus Compounds Outside the Present Invention

| No. | Phosphorus Compound | Trade Name | Name of Manufacturer |
|---|---|---|---|
| AY-1 | 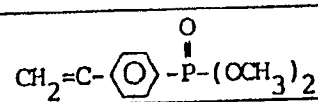 | | |
| AY-2 | 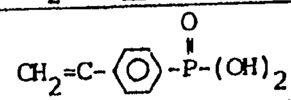 | | |
| AY-3 | 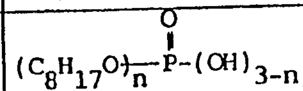 n=1-2 | JP508 | Johoku Kagaku Kogyo |
| AY-4 | 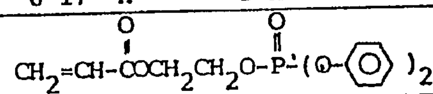 | AR-260 | Daihachi Kagaku Kogyosho |
| AY-5 | 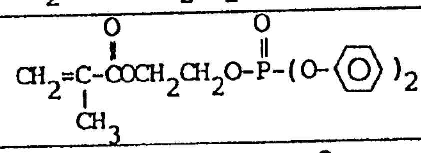 | MR-260 | Daihachi Kagaku Kogyosho |
| AY-6 | 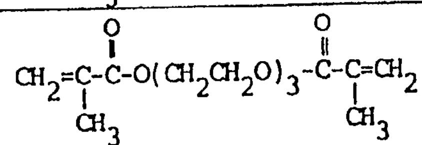 | NK ESTER 3G | Shin Nakamura Kagaku Kogyo |
| AY-7 | 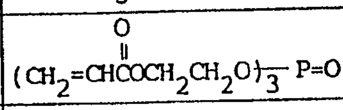 | | |
| AY-8 | Polyphosphoric acid | Reagent | Yoneyama Yakuhin Kogyo |
| AY-9 | $[CH_3(CH_2)_3O]_3P$ | | |
| AY-10 | $(C_6H_5)_3P$ | | |

Table 6 Known Additives for Improving Force (Comparative Examples)

| No. | Compound | Patent Publication for Reference |
|---|---|---|
| AY-11 | Trimethyl borate | Japanese Patent Publication No. 42101/1982 |
| AY-12 | 2,4-Hydroxybenzoic acid | Japanese Patent Publication No. 54029/1981 |
| AY-13 | o-Phthalic acid | Japanese Patent Publication No. 37263/1978 |
| AY-14 | Maleic acid | Japanese Patent Publication No. 30908/1983 |
| AY-15 | Thiosalicylic acid | Japanese Patent Publication No. 54029/1981 |
| AY-16 | Pyromellitic anhydride | Japanese Patent Publication No. 37263/1978 |

Table 7

| Component \ No. | | Y-1 | Y-2 | Y-3 | Y-4 | Y-5 | Y-6 | Y-7 | Y-8 | X-1 | X-2 | X-3 | X-4 | X-5 | Y-9 |
|---|---|---|---|---|---|---|---|---|---|---|---|---|---|---|---|
| Three Bond 1741 | | 100 | 100 | 100 | 100 | 100 | 100 | 100 | 100 | 100 | 100 | 100 | 100 | 100 | 100 |
| RX-1 | | | | 8 | | | | | | 8 | | | | | |
| RX-2 | | | | | 10 | | | | | | 10 | | | | |
| RX-3 | | | | | | 20 | | | | | | 20 | | | |
| RX-4 | | | | | | | 5 | | | | | | 5 | | |
| RX-5 | | | | | | | | 5 | | | | | | 5 | |
| RY-1 | | | | | | | | | 10 | | | | | | 10 |
| AX-4 | | | 0.1 | | | | | | | 0.1 | 0.1 | 0.1 | 0.1 | 0.1 | 0.1 |
| Bonding Force | Tensile Shear ($kgf/cm^2$) | 162 | 193 | 176 | 161 | 175 | 182 | 174 | 171 | 244 | 251 | 223 | 240 | 226 | 179 |
| | Peeling (kgf/25mm) | 0 | 1.8 | 2.5 | 2.5 | 3.0 | 3.1 | 1.9 | 0 | 6.8 | 8.0 | 9.0 | 7.0 | 5.1 | 1.0 |
| | Impact ($kgf \cdot cm/inch^2$) | 32 | 150 or more | 71 | 46 | 50 | 75 | 64 | 34 | 150 or more | 150 or more | 150 or more | 150 or more | 150 or more | 150 or more |

o With mere addition of an elastomeric polymer to α-cyanoacrylate, a sufficient bonding force was not obtained, but when an acid type acryl group-containing phosphoric ester according to the present invention was added thereto, the bonding force was greatly improved. But when the elastomeric polymer was substituted by methyl polymethacrylate used heretofore was a thickening agent and not falling under the scope of the present invention, there was not recognized any improvement of bonding force.

Table 8

| Component \ No. | | Y-1 | Y-2 | Y-3 | X-10 | X-11 | X-12 | X-4 | X-13 | X-14 | X-15 | X-16 | X-17 |
|---|---|---|---|---|---|---|---|---|---|---|---|---|---|
| Three Bond 1741 | | 100 | 100 | 100 | 100 | 100 | 100 | 100 | 100 | 100 | 100 | 100 | 100 |
| RX-1 | | | | 8 | 8 | 8 | 8 | 8 | 8 | 8 | 8 | 8 | 8 |
| AX-1 | | | | | 0.1 | | | | | | | | |
| AX-2 | | | | | | 0.1 | | | | | | | 0.05 |
| AX-3 | | | | | | | 0.1 | | | | | | |
| AX-4 | | | 0.1 | | | | | 0.1 | | | | | 0.05 |
| AX-5 | | | | | | | | | 0.1 | | | | |
| AX-6 | | | | | | | | | | 0.1 | | | |
| AX-7 | | | | | | | | | | | 0.1 | | |
| AX-8 | | | | | | | | | | | | 0.1 | |
| Bonding Force | Tensile Shear ($kgf/cm^2$) | 162 | 193 | 176 | 210 | 226 | 222 | 240 | 210 | 220 | 193 | 192 | 236 |
| | Peeling (kgf/25mm) | 0 | 1.8 | 2.5 | 5.3 | 5.8 | 6.2 | 7.0 | 5.0 | 5.1 | 3.9 | 4.1 | 6.3 |
| | Impact ($kgf\cdot cm/inch^2$) | 32 | 150 or more | 71 | 150 or more | 150 or more | 150 or more | 150 or more | 150 or more | 150 or more | 150 or more | 150 or more | 150 or more |

o When an acid type acryl group-containing phosphoric ester was added to α-cyanoacrylate with an elastomeric polymer melted therein, there was recognized a great improvement of bonding force. Particularly, the peeling strength was improved.

Table 9

| Component \ No. | | Y-1 | Y-2 | Y-3 | X-1 | Y-10 | Y-11 | Y-13 | Y-14 | Y-15 | Y-16 | Y-17 | Y-18 | Y-19 | Y-20 | Y-21 |
|---|---|---|---|---|---|---|---|---|---|---|---|---|---|---|---|---|
| Three Bond 1741 | | 100 | 100 | 100 | 100 | 100 | 100 | 100 | 100 | 100 | 100 | 100 | 100 | 100 | 100 | 100 |
| RX-1 | | | | 8 | 8 | | 8 | 8 | 8 | 8 | 8 | 8 | 8 | 8 | 8 | 8 |
| AX-4 | | | 0.1 | | 0.1 | | | | | | | | | | | |
| AY-1 | | | | | | 0.1 | 0.1 | | | | | | | | | |
| AY-2 | | | | | | | | 0.1 | | | | | | | | |
| AY-3 | | | | | | | | | 0.1 | | | | | | | |
| AY-4 | | | | | | | | | | 0.1 | | | | | | |
| AY-5 | | | | | | | | | | | 0.1 | | | | | |
| AY-6 | | | | | | | | | | | | 0.1 | | | | |
| AY-7 | | | | | | | | | | | | | 0.1 | | | |
| AY-8 | | | | | | | | | | | | | | 0.1 | | |
| AY-9 | | | | | | | | | | | | | | | 0.1 | |
| AY-10 | | | | | | | | | | | | | | | | 0.1 |
| Bonding Force | Tensile Shear ($kgf/cm^2$) | 162 | 193 | 176 | 244 | 179 | 165 | 167 | 172 | 161 | 173 | 177 | 180 | 155 | -- | -- |
| | Peeling (kgf/25mm) | 0 | 1.8 | 2.5 | 6.8 | 0.2 | 1.8 | 1.6 | 2.0 | 1.6 | 1.3 | 1.0 | 1.1 | 0.5 | -- | -- |
| | Impact ($kgf \cdot cm/inch^2$) | 32 | 150 or more | 71 | 150 or more | 46 | 54 | 60 | 62 | 58 | 56 | 54 | 61 | 36 | -- | -- |

Y-20 and Y-21 gelled just after their addition and so could not be measured for bonding force.

o With phosphorus compounds outside the present invention, there was not recognized any improvement of bonding force.

Table 10

| Component \ No. | | Y-1 | Y-2 | Y-4 | X-2 | Y-22 | Y-23 | Y-24 | Y-25 | Y-26 | Y-27 | Y-28 |
|---|---|---|---|---|---|---|---|---|---|---|---|---|
| Three Bond 1741 | | 100 | 100 | 100 | 100 | 100 | 100 | 100 | 100 | 100 | 100 | 100 |
| RX-2 | | | | 10 | 10 | 10 | 10 | 10 | 10 | 10 | 10 | |
| AX-4 | | | 0.1 | | 0.1 | | | | | | | |
| AY-11 | | | | | | 0.1 | | | | | | |
| AY-12 | | | | | | | 0.1 | | | | | |
| AY-13 | | | | | | | | 0.1 | | | | |
| AY-14 | | | | | | | | | 0.1 | | | |
| AY-15 | | | | | | | | | | 0.1 | | |
| AY-16 | | | | | | | | | | | 0.1 | 0.1 |
| Bonding Force | Tensile Shear ($kgf/cm^2$) | 162 | 193 | 161 | 251 | 176 | 170 | 162 | 167 | 181 | 190 | 188 |
| | Peeling (kgf/25mm) | 0 | 1.8 | 2.5 | 8.0 | 2.8 | 2.8 | 2.7 | 2.6 | 2.5 | 3.3 | 0.9 |
| | Impact ($kgf\cdot cm/inch^2$) | 32 | 150 or more | 46 | 150 or more | 77 | 66 | 58 | 63 | 57 | 79 | 132 |

o The acid type acryl group-containing phosphorus compound according to the present invention exhibited a remarkable improvement of boding force as compared with known additives.

## Claims

1. An adhesive composition comprising a predominant amount of an a-cyanoacrylate and an effective amount of at least one phosphorus compound represented by the following formula:

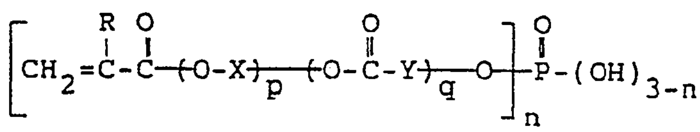

wherein R is H or $CH_3$; X and Y are each an alkylene group having 1 to 6 carbon atoms, which may have a substituent group; p is 1 to 10; q is 0 to 10; and n is 1 to 2.

2. An adhesive composition as set forth in claim 1, further containing an elastomeric polymer capable of being melted to 0.5% by weight or more in said a-cyanoacrylate.

3. An adhesive composition-as set forth in claim 2, wherein said elastomeric polymer has an average molecular weight of not less than 5,000, a Mooney viscosity defined by JIS K6300 of 10 to 60 ($ML_{1+3}$100°C) and a glass transition temperature of not higher than 15°C.

4. An adhesive composition as set forth in claim 2 or claim 3 wherein the amount of said elastomeric polymer is in the range of 0.5% to 30% by weight.

5. An adhesive composition as set forth in any one of claims 1 to 4 wherein the amount of said phosphorus compound is in the range of 0.001% to 5% by weight.

European Patent Office

# EUROPEAN SEARCH REPORT

Application Number

EP 91 30 2167

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 77, no. 16, 16th October 1972, page 31, abstract no. 102672c, Columbus, Ohio, US; & JP-A-71 37 276 (MATSUMOTO SEIYAKU KOGYO CO., LTD) 02-11-1971 | | C 09 J 4/04 |
| A | GB-A-2 218 104 (ICI) | | |
| | | | TECHNICAL FIELDS SEARCHED (Int. Cl.5) |
| | | | C 09 J<br>C 08 F |

The present search report has been drawn up for all claims

| Place of search | Date of completion of the search | Examiner |
|---|---|---|
| THE HAGUE | 27-05-1991 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)